# EUROPEAN PATENT APPLICATION

(11) **EP 4 756 932 A1**
(43) Date of publication of application: **10.06.2026**
(21) Application number: 24851452.3
(22) Date of filing: 01.07.2024
(51) Int. Cl.: H01M 4/62, H01M 4/13, H01M 4/36

(54) **FLUORINE-BASED LUBRICANT, ELECTRODE, AND SECONDARY BATTERY**

(30) Priority: 04.08.2023 JP 2023127472
(71) Applicant: TOYOTA JIDOSHA KABUSHIKI KAISHA, Toyota-Shi, Aichi-Ken 471-8571 (JP); Daikin Industries, Ltd., Osaka-shi, Osaka 530-0001 (JP)
(72) Inventor: NOMOTO, Kazushige, Toyota-shi, Aichi-ken 471-8571 (JP); HIRAGA, Kentaro, Osaka-Shi, Osaka 530-0001 (JP); YAMADA, Takaya, Osaka-Shi, Osaka 530-0001 (JP)
(74) Representative: Cabinet Beau de Loménie
(86) International application number: PCT/JP2024/023742
(87) International publication number: WO 2025/033021

(57) **Abstract**

The present disclosure achieves the object by providing a fluorine-based lubricant used for an active material layer containing an active material and a sulfide solid electrolyte, the fluorine-based lubricant which is solid at 25°C.

## Description

### Technical Field

The present disclosure relates to a fluorine-based lubricant, an electrode, and a secondary battery.

### Background Art

A battery such as a lithium ion secondary battery is provided with an electrode containing a current collector and an active material layer. For example, Patent Literature 1 discloses an anode mixture layer for all solid-state lithium ion secondary battery containing a porous silicon particle as an anode active material, and a sulfide solid electrolyte. Also, Patent Literature 2 discloses the usage of a liquid electrolyte including an alkali metal salt dissolved in a non-aqueous solvent containing perfluoro ether as an electrolyte (liquid electrolyte) included in the active material layer. Further, Patent Literature 3 discloses an electrode including a perfluoro polyether group-containing compound on its surface.

### Citation List

### Patent Documents

Patent Literature 1: Japanese Patent Application Laid-Open (JP-A) No. 2020-170605
Patent Literature 2: JP-A No. 2018-200866
Patent Literature 3: JP-A No. 2018-147887

### Summary

### Technical Problem

In an active material layer containing an active material and a sulfide solid electrolyte, the active material included in the active material layer expands and contracts due to charge and discharge. When the volume change of the active material layer is large, there is a risk that the interfaces of the active material particles may be peeled off, and there is a risk of occurrence of peel-off of the electrode. When the peel-off of the electrode occurs, the battery resistance increases, and there is a risk of degrade in the battery performance. In particular, while an active material containing Si (Si-based active material) is effective for increasing the energy density of a battery, the volume change due to charge and discharge is large, and the degrade in the battery performance described above easily occurs.

The present disclosure has been made in view of the above circumstances and a main object thereof is to provide a fluorine-based lubricant capable of suppressing the peel-off of the electrode.

### Solution to Problem

[1] A fluorine-based lubricant for an active material layer containing an active material and a sulfide solid electrolyte, the fluorine-based lubricant being solid at 25°C.
[2] The fluorine-based lubricant according to [1], having a melting point of 120°C or less.
[3] The fluorine-based lubricant according to [1] or [2] having a fluoropolyether structure.
[4] An electrode comprising an active material layer and a current collector, wherein the active material layer contains a Si-based active material, a sulfide solid electrolyte, and a fluorine-based lubricant, and the fluorine-based lubricant is a fluorine-based lubricant according to any one of [1] to [3].
[5] The electrode according to [4], wherein the Si-based active material and the fluorine-based lubricant which is solid are conjugated.
[6] The electrode according to [4] or [5], wherein a ratio of the fluorine-based lubricant to the Si-based active material is 4 weight% or more, 12 weight% or less.
[7] A secondary battery comprising the electrode according to any one of [4] to [6].

### Advantageous Effects

The present disclosure exhibits an effect of providing a fluorine-based lubricant capable of suppressing the peel-off of the electrode.

### Brief Description of Drawings

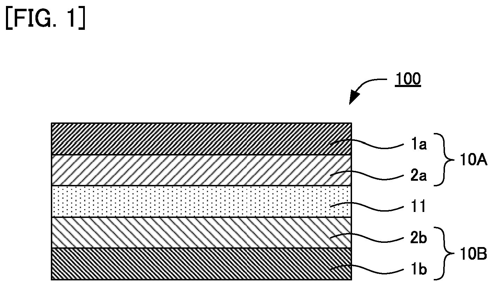

[FIG. 1] It is a schematic cross-sectional view exemplifying the secondary battery in the present disclosure.

### Description of Embodiments

The fluorine-based lubricant, the electrode, and the secondary battery in the present disclosure will be hereinafter explained in details. Here, in the present disclosure, "fluorine-based lubricant" refers to a lubricant that contains a fluorine (F).

### A. Fluorine-based lubricant

The fluorine-based lubricant in the present disclosure is used for an active material layer containing an active material and a sulfide solid electrolyte, and is solid at 25°C. The active material, the sulfide solid electrolyte, and the active material layer will be described later.

As described above, the active material expands and contracts due to charge and discharge, and the volume change is large particularly in the Si-based active material. For this reason, there is a risk of occurrence of peel-off of the electrode using the active material. However, it is presumed that the fluorine-based lubricant in the present disclosure enters the space where the interfaces of the active materials peeled off, and as a result, it is considered that the peel-off of the electrode can be suppressed (peel-off can be repaired).

The melting point of the fluorine-based lubricant is, for example, 38°C or more, may be 50°C or more, may be 65°C or more, and may be 80°C or more. Meanwhile, the melting point of the fluorine-based lubricant is, for example, 200°C or less, may be 150°C or less, and may be 100°C or less.
When the fluorine-based lubricant has the above melting point, even though the interface between active materials is peeled off due to expansion and contraction of the active material, it is considered that the state of the fluorine-based lubricant will be changed to a liquid due to the heat of charge and discharge of the battery, or heating of the battery, thus the lubricant works as a lubricant between the active materials to repair the peel-off, and can suppress the increase in battery resistance. In particular, the melting point of the fluorine-based lubricant is preferably in the range of 60°C or more and 120°C or less. Here, the melting point of the fluorine-based lubricant can be obtained as a temperature to a maximum value in a heat-fusing curve when the temperature is raised at a speed of 5°C/minute using a differential scanning calorimetry (DSC).

The fluorine-based lubricant usually contains at least one of a fluoroalkyl group and a fluoroalkene group. The fluoroalkyl group may be a functional group (perfluoroalkyl group) in which all of hydrogen in the alkyl group is substituted with fluorine, and may be a functional group in which a part of hydrogen in the alkyl group is substituted with fluorine. The carbon number of the fluoroalkyl group is, for example, 1 or more and 10 or less, and may be 1 or more and 5 or less. Also, the carbon number of the fluoroalkylene group is, for example, 1 or more and 20 or less, and may be 1 or more and 15 or less. In addition, the fluorine-based lubricant may have a straight chain structure, and may have a branched chain structure. Further, the fluorine-based lubricant may or may not have an ether bond in a main chain. Furthermore, there is no particular limitations on a terminal functional group positioned at the end of the fluorine-based lubricant. Examples of the terminal functional group may include a fluorine group, a hydrogen group, a hydroxyl group, an aldehyde group, a carboxylic acid group, an alkylester group of C1 - 10, an amide group that may include one or more substituted group, and an amino group that may include one or more substituted group.

An example of the fluorine-based lubricant may be a carboxylic acid compound containing at least one of the fluoroalkyl group and the fluoroalkylene group. The carbon numbers of the fluoroalkyl group and the fluoroalkylene group are as described above. Also, the carboxylic acid compound may include one carboxy group, may include two carboxy groups, and may include three or more carboxy groups. Examples of the carboxylic acid compound may include compounds as below.

HOOC-(CF₂)₂-COOH

HOOC-(CF₂)₃-COOH

HOOC-(CF₂)₄-COOH

HOOC-CF₂O(CF₂)₂OCF₂-COOH

CF₃(CF₂)₁₀-COOH

CF₃(CF₂)₁₂-COOH

Another example of the fluorine-based lubricant may be an alcohol compound containing at least one of the fluoroalkyl group and the fluoroalkylene group. The carbon numbers of the fluoroalkyl group and the fluoroalkylene group are as described above. Also, the alcohol compound may include one hydroxyl group, may include two hydroxyl groups, and may include three or more hydroxyl groups. Examples of the alcohol compound may include compounds as below.

HO-CH₂(CF₂)₂CH₂-OH

HO-CH₂(CF₂)₃CH₂-OH

HO-CH₂(CF₂)₄CH₂-OH

HO-CH₂CF₂O(CF₂)₂OCF₂CH₂-OH

CF₃(CF₂)₁₃-OH

Another example of the fluorine-based lubricant may be fluoroalkane. The carbon number of the fluoroalkane is, for example, 10 or more and 20 or less. Examples of the fluoroalkane may include compounds as below.

CF₃(CF₂)₁₁-CF₃

CF₃(CF₂)₁₄-CF₃

CF₃(CF₂)₁₈-CF₃

Another example of the fluorine-based lubricant may be an ester compound containing at least one of the fluoroalkyl group and the fluoroalkylene group. The carbon numbers of the fluoroalkyl group and the fluoroalkylene group are as described above. Above all, the carbon number of the fluoroalkylene group is preferably 8 or more and 15 or less. The ester compound may include one ester group, may include two ester groups, and may include three or more ester groups. Examples of the ester compound may include compounds as below.

CH₃OOC-(CF₂)₁₀-COOCH₃

CF₃(CF₂)₁₂-COOCH₃

In addition, examples of the fluorine-based lubricant may include a compound having a fluoropolyether structure (FPE structure). The compound having the fluoropolyether structure (FPE structure) has a structure shown as below formula (1).

E1-Rf1-RF-O-Rf2-E2 (1)

[In the formula (1), Rf1 and Rf2 are each independently a divalent alkylene group of C1 - 16 that may be substituted with 1 or 2 or more fluorine atoms,
E1 and E2 are each independently univalent group selected from the group consisiting of a fluorine group, a hydrogen group, a hydroxyl group, an aldehyde group, a carboxylic acid group, an alkylester group of C1 - 10, an amide group that may include one or more substituted group, and an amino group that may include one or more substituted group,
RF is a group represented by -(AO)ₙ- (A includes a carbon chain as a main chain, and includes at least one fluorine atom bonded to the carbon chain).]

The carbon number of the carbon chain of the A is, for example, preferably 1, 2, 3 or 4. The A may or may not include a hydrogen atom. Also, the A may include -CF₃₋ₓHₓ (0 ≤ x ≤ 3) as a side chain. From the viewpoint that it is solid at 25°C, RF is preferably -(CH₂CF₂CF₂O)ₙ-. Note that n is a number greater than or equal to 1.

Among the above described compounds, for reasons of electrochemical stability and low volatility at a high temperature, a compound having a fluoropolyether structure is preferable.

### B. Electrode

The electrode in the present disclosure is an electrode including an active material layer and a current collector, wherein the active material layer contains an active material, and a fluorine-based lubricant, and the fluorine-based lubricant is the fluorine-based lubricant described above.

According to the present disclosure, the active material layer in the electrode contains the above described fluorine-based lubricant, and thus the peel-off is suppressed in the electrode.

### 1. Active material layer

The electrode in the present disclosure includes an active material layer and a current collector. Also, the active material layer contains an active material, a sulfide solid electrolyte, and a fluorine-based lubricant.

### (1) Active material

Examples of the active material may include a carbon-based active material, an oxide active material, and a metal active material. Examples of the carbon-based active material may include graphite. Examples of the oxide active material may include a lithium titanate. Examples of the metal active material may include a Si-based active material. Among these, the Si-based active material is preferable. The Si-based active material contains at least a Si element. Examples of the Si-based active material may include a simple substance Si, a Si alloy and a Si oxide. The Si alloy preferably contains a Si element as a main component. The proportion of Si element in the Si alloy is, for example, 50 at% or more, may be 70 at% or more, and may be 90 at% or more. Examples of the Si alloy may include a Si-Li-based alloy, a Si-Al-based alloy, a Si-Sn-based alloy, a Si-In-based alloy, a Si-Ag-based alloy, a Si-Pb-based alloy, a Si-Sb-based alloy, a Si-Bi-based alloy, a Si-Mg-based alloy, a Si-Ca-based alloy, a Si-Ge-based alloy, and a Si-Pb-based alloy. The Si alloy may be a two component alloy, and may be a multi component alloy of three components or more. The Si alloy may be the Si-Li-based alloy. Also, examples of the Si oxide may include SiO.

Examples of the shape of the active material may include a granular shape. The average particle size (D₅₀) of the active material is, for example, 10 nm or more and 50 µm or less. Incidentally, the average particle size (D₅₀) refers to 50% accumulation particle size in a volume-based particle distribution by a laser diffraction particle distribution measurement device.

The proportion of the active material in the active material layer is, for example, 50 weight% or more and 99 weight% or less.

### (2) Sulfide solid electrolyte

The sulfide solid electrolyte is usually an electrolyte that contains sulfur (S) as a main component of the anion element. It is preferable that the sulfide solid electrolyte contains, for example, a Li element, an X element (X is at least one kind of P, As, Sb, Si, Ge, Sn, B, Al, Ga, and In), and a S element. Also, the sulfide solid electrolyte may further contain at least one of an O element and a halogen element.

Examples of the sulfide solid electrolyte may include Li₂S-P₂S₅, Li₂S-P₂S₅-LiI, Li₂S-P₂S₅-GeS₂, Li₂S-P₂S₅-Li₂O, Li₂S-P₂S₅-Li₂O-LiI, Li₂S-P₂S₅-LiI-LiBr, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-P₂S₅-LiI, Li₂S-B₂S₃, Li₂S-P₂S₅-ZₘSₙ (provided that m and n is a positive number; Z is any one of Ge, Zn, and Ga), Li₂S-GeS₂, Li₂S-SiS₂-Li₃PO₄, and Li₂S-SiS₂-LiₓMO_{y} (provided that x and y is a positive number; M is any one of P, Si, Ge, B, Al, Ga, and In).

The sulfide solid electrolyte may be glass (amorphous), and may be a glass ceramic. Also, the average particle size (D₅₀) of the sulfide solid electrolyte is, for example, 0.01 µm or more and 10 µm or less.

The proportion (weight%) of the sulfide solid electrolyte in the active material layer is, for example, 10 weight% or more and 50 weight% or less.

### (3) Fluorine-based lubricant

The melting point and the kind of the fluorine-based lubricant are in the same contents as those described in "A. Fluorine-based lubricant"; thus, the descriptions herein are omitted.

The ratio of the fluorine-based lubricant to the active material in the active material layer is, for example, 4 weight% or more, may be 6 weight% or more and may be 8 weight% or more. Meanwhile, the ratio is, for example, 12 weight% or less, and may be 10 weight% or less.

Also, in the active material layer, the active material and the fluorine-based lubricant that is solid are preferably conjugated. For example, an active material to which a physical kneading such as mechanical milling is performed, and a fluorine-based lubricant that is solid, are used as materials for the active material. Whether the active material and the fluorine-based lubricant that is solid are conjugated or not can be confirmed by, for example, a microscope observation such as SEM (scanning electron microscope) and TEM (transmission electron microscope). When the active material and the fluorine-based lubricant that is solid are conjugated, the interface between active materials is formed further well, and in particular, it is considered that the resistance in the initial charge and discharge is suppressed.

### (4) Active material layer

The active material layer may contain at least one of a conductive aid and a binder, other than the above described active material, sulfide solid electrolyte, and fluorine-based lubricant.

Examples of the conductive aid may include a carbon material. Examples of the carbon material may include a particulate carbon material such as acetylene black (AB) and Ketjen black (KB); and a fiber carbon material such as carbon fiber, carbon nanotube (CNT) and carbon nanofiber (CNF).

Examples of the binder may include a rubber-based binder such as butadiene rubber (BR), acrylate butadiene rubber (ABR), and styrene butadiene rubber (SBR); and a fluorine-containing binder such as polyvinylidene fluoride (PVDF) and polytetra fluoroethylene (PTFE).

The thickness of the active material layer is not particularly limited, but for example, it is 0.1 µm or more and 1000 µm or less. The active material layer may be a cathode active material layer and may be an anode active material layer. In other words, the electrode in the present disclosure may be a cathode, and may be an anode.

### 2. Current collector

The current collector is a member that has a function of collecting electrons of the above described active material layer. The current collector may be a cathode current collector, and may be an anode current collector. Examples of the material for the current collector may include a metal such as aluminum, copper, SUS, and nickel. Examples of the shape of the current collector may include a foil shape and a mesh shape.

### 3. Electrode

The electrode in the present disclosure is usually used for a secondary battery. The secondary battery will be described later.

### B. Secondary battery

FIG. 1 is a schematic cross-sectional view exemplifying the secondary battery in the present disclosure. Secondary battery 100 shown in FIG. 1 includes cathode 10A including cathode current collector 1a and cathode active material layer 2a, anode 10B including anode current collector 1b and anode active material layer 2b, and electrolyte layer 11 arranged between the cathode 10A and the anode 10B. The secondary battery 100 includes the above described electrode. In specific, at least one of the cathode 10A and the anode 10B in the secondary battery 100 corresponds to the electrode described in "A.

### Electrode" above.

According to the present disclosure, since the secondary battery includes the above described electrode (electrode of which pee-off is suppressed), increase in resistance due to peel-off of the electrode is suppressed in the secondary battery.

### 1. Cathode

The secondary battery usually includes a cathode. Also, the cathode usually includes a cathode current collector, and a cathode active material layer arranged on the electrolyte layer side surface of the cathode current collector. The cathode in the secondary battery preferably corresponds to the electrode described above. Meanwhile, when the cathode in the present disclosure does not correspond to the electrode described above, usually, the anode in the present disclosure corresponds to the electrode described above. In this case, a conventional arbitrary cathode can be used as the cathode.

### 2. Anode

The secondary battery usually includes an anode. Also, the anode usually includes an anode current collector, and an anode active material layer arranged on the electrolyte layer side surface of the anode current collector. The anode in the secondary battery preferably corresponds to the electrode described above. Meanwhile, when the anode in the present disclosure does not correspond to the electrode described above, usually, the cathode in the present disclosure corresponds to the electrode described above. In this case, a conventional arbitrary anode can be used as the anode.

### 3. Electrolyte layer

The secondary battery usually includes an electrolyte layer arranged between the cathode and the anode. In more specific, the electrolyte layer is usually arranged between the cathode active material layer and the anode active material layer. The electrolyte layer preferably contains the above described sulfide solid electrolyte as the electrolyte. In other words, the electrolyte layer is preferably a solid electrolyte layer.

### 4. Secondary battery

The secondary battery in the present disclosure is typically a lithium ion secondary battery. Also, the secondary battery is preferably an all solid-state battery including a sulfide solid electrolyte as a solid electrolyte.

Also, examples of the applications of the secondary battery may include a power source for vehicles such as hybrid electric vehicles (HEV), plug-in hybrid electric vehicles (PHEV), battery electric vehicles (BEV), gasoline-fueled automobiles and diesel powered automobiles. In particular, it is preferably used as a power source for driving hybrid electric vehicles (HEV), plug-in hybrid electric vehicles (PHEV), and battery electric vehicles (BEV). Also, the secondary battery may be used as a power source for moving bodies other than vehicles (such as rail road transportation, vessel and airplane), and may be used as a power source for electronic products such as information processing equipment.

Incidentally, the present disclosure is not limited to the embodiments. The embodiments are exemplification, and any other variations are intended to be included in the technical scope of the present disclosure if they have substantially the same constitution as the technical idea described in the claims of the present disclosure and have similar operation and effect thereto.

### Examples

### [Synthesis Example 1] (Synthesis of compound 1-1)

In a reaction container substituted with nitrogen, 15.4 g of cesium fluoride, 290 mL of diglyme, and 107.0 g of 2,2,3-trifluoro-3-methyloxopropanoate were added, and stirred for 10 minutes under an ice bath at 5°C. Sequentially, under the ice bath of 5°C, 526.0 g of 2,2,3,3-tetrafluorooxetane was dropped from a dropping funnel to the reaction container taking 20 minutes, and stirred for 2 hours. After that, the ice bath was removed, stirred for 50 hours, and thereby a reaction solution was obtained. To the obtained reaction solution, 60 mL of methanol was dropped taking 20 minutes, and stirred for 24 hours. Then, volatiles were removed from the reaction solution under reduced pressure. After that, 80 g of m-xylenehexafluoride and 40 g of water were added and washed by two liquid, 5 g of magnesium sulfate was added to the extracted organic layer and dried to obtain a treatment solution. The volatiles were removed from the obtained treatment solution, and thereby a compound 1-1 (compound having FPE structure) represented by the below chemical formula was obtained.

[Chemical 1] MeOOCCF₂CH₂O(CF₂CF₂CH₂O)ₙCF₂CF₂COOMe

### [Comparative Example 1]

A conductive aid, a binder, a sulfide solid electrolyte, and a cathode active material (LiNi_{0.8}Co_{0.15}Mn_{0.05}O₂) were added to an organic solvent, and kneaded using an ultrasonic homogenizer. Thereby, a cathode slurry was obtained. The cathode slurry was applied on a cathode current collector (Al foil) and dried to produce a cathode including a cathode current collector and a cathode active material layer. Incidentally, butyl butyrate was used as the organic solvent, VGCF was used as the conductive aid, PVDF was used as the binder, and 10LiI-15LiBr-75Li₃PS₄ was used as the sulfide solid electrolyte. The same materials were also used for the later described procedures.

Next, a conductive aid, a binder, a sulfide solid electrolyte, and an anode active material (Si particle) were added to an organic solvent, and kneaded using an ultrasonic homogenizer. Thereby, an anode slurry was obtained. The anode slurry was applied on an anode current collector (Cu foil) and dried to produce an anode including an anode current collector and an anode active material layer.

Next, a binder and a sulfide solid electrolyte were added to an organic solvent, and kneaded using an ultrasonic homogenizer. Thereby, a solid electrolyte layer slurry was obtained. The obtained solid electrolyte slurry was applied on a transferring foil (Al foil) and dried to produce a transferring member including a solid electrolyte layer and a transferring foil.

The cathode, the anode, and the transferring member were formed into a strip shape. After that, the cathode and the transferring member were overlapped so that the solid electrolyte layer and the cathode active material layer faced to each other, and roll-pressed at 165°C and a pressure of 50 kN/cm. Then, the transferring foil of the transferring member was peeled off to produce a cathode side structure body. Also, the transferring member and the anode were overlapped so that the solid electrolyte layer and the anode active material layer faced to each other, and roll-pressed at 25°C and a pressure of 50 kN/cm. Then, the transferring foil of the transferring member was peeled off to produce an anode side structure body.

The anode side structure body and the cathode side structure body were punched out into a circle shape having a diameter of, respectively, 13.00 mm and 11.28 mm. The sulfide solid electrolyte was added on the solid electrolyte layer of the anode side structure body, and pressed by a uniaxial pressing machine. After that, the cathode side structure body and the anode side structure body were overlapped so that the solid electrolyte layers faced to each other to obtain a layered body. A tab for taking out current was attached to the layered body, and the layered body was sealed in an aluminum laminate using a vacuum sealer. Thereby, an evaluation battery (all solid-state battery) was produced.

### [Examples 1 to 3]

An evaluation battery was produced in the same manner as in Comparative Example 1 except that the fluorine-based lubricant (compound 1-1 having FPE structure) was added to the organic solvent in the production of the anode slurry. Incidentally, the fluorine-based lubricant was added in an amount with which the proportion (wt%) of the fluorine-based lubricant to the anode active material (Si particle) became the values in Table 1. Note that the melting point of the fluorine-based lubricant used was 66°C.

### [Example 4]

The Si particle and the fluorine-based lubricant in a solid state were weighed in the ratio in Table 1, mixed with mortar and thereby a composite was produced. An evaluation battery was produced in the same manner as in Comparative Example 1, except that the composite was used in the production of the anode slurry.

### [Evaluation]

### (Peel strength test)

The peel strength was measured using a micro autograph. First, in the roll-pressing machine, the anode structure bodies of Comparative Example 1 and Examples 1 to 4 pressed at a linear pressure of 2.5 kN/cm were punched out into Φ14.5. Next, a double-sided tape was adhered to the sampling stage of the micro autograph, the anode structure body punched out was adhered so that the current collecting foil side became downward, and the coated surface was arranged upward. Also, a double-sided tape of Φ11.28 was adhered to the terminal side of the micro autograph. Then, the terminal was moved to down direction until the anode structure body, and pressurized until the pressure at the contact became 50 N/cm². After that, the negative pressure when moved to up direction was measured, and the maximum value was regarded as the peel strength.

### (Battery performance test)

The resistance change rate of the evaluation batteries produced in Comparative Example 1 and Examples 1 to 3 was measured in the following manner. First, charge and discharge (cycle test) was performed in the conditions of 25°C, 2C and SOC 93% - 10% for 100 cycles, and then the resistance value (resistance value before heating) was measured. Then, each evaluation battery after the cycle test was heated at 100°C for 6 hours, and returned to a normal temperature to measure the resistance value (resistance value after heating). The resistance change rate was calculated from the resistance value before heating and the resistance value after heating. The results are shown in Table 1. Incidentally, when the resistance change rate is minus, it means that the resistance increased after heating, and when the resistance increase rate is plus, it means that the resistance decreased after heating.

Also, the evaluation batteries of Example 2 and Example 4 were initially charged until 3.7 V, and then initially discharged at a rate of 5 C. The initial resistance values were calculated from the voltage drop amount after 5 seconds from the initial discharge, and compared. The results are shown in Table 1.

**[Table 1]**

| | Lubricant adding amount | Resistance change rate | Electrode peel strength | Initial resistance |
|---|---|---|---|---|
| | (wt%) | (%) | (N) | (Ω) |
| Comp. Ex. 1 | 0 | -1 | 34 | - |
| Example 1 | 4 | 8 | 37 | - |
| Example 2 | 8 | 9 | 41 | 67 |
| Example 3 | 12 | 4 | 48 | - |
| Example 4 | 8 | - | - | 65 |

As shown in Table 1, the peel strength of all Examples 1 to 4 was higher compared to that of Comparative Example 1, and it was confirmed that the peel-off was suppressed in the electrode of the present disclosure. Also, from the above, it is presumed that the increase of battery resistance is suppressed in the battery using the electrode of the present disclosure. Also, the resistance value was decreased (resistance change rate increased) by heating after the cycle test in Examples 1 to 3, compared to Comparative Example 1. It is considered that the resistance value decreased since the fluorine-based lubricant that became liquid by heating was filled between particles to maintain and repair the excellent electron conduction path. Also, in terms of the initial resistance, Example 4 was better than Example 2. It is presumed that the excellent electron conduction path was formed when the Si-based active material and the fluorine-based lubricant were conjugated.

### Reference Signs List

- 1: current collector
- 2: active material layer
- 10: electrode
- 11: electrolyte layer
- 100: secondary battery

## Claims

1. A fluorine-based lubricant for an active material layer containing an active material and a sulfide solid electrolyte, the fluorine-based lubricant being solid at 25°C.

2. The fluorine-based lubricant according to claim 1, having a melting point of 120°C or less.

3. The fluorine-based lubricant according to claim 1 having a fluoropolyether structure.

4. An electrode comprising an active material layer and a current collector, wherein
the active material layer contains an active material, a sulfide solid electrolyte, and a fluorine-based lubricant, and
the fluorine-based lubricant is a fluorine-based lubricant according to any one of claims 1 to 3.

5. The electrode according to claim 4, wherein the active material and the fluorine-based lubricant which is solid are conjugated.

6. The electrode according to claim 4, wherein a ratio of the fluorine-based lubricant to the active material is 4 weight% or more, 12 weight% or less.

7. A secondary battery comprising the electrode according to claim 4.
